# EUROPÄISCHE PATENTSCHRIFT

(11) **EP 1 114 244 B1**
(45) Veröffentlichungstag und Bekanntmachung des Hinweises auf die Patenterteilung: **06.10.2004**
(21) Anmeldenummer: 00960297.0
(22) Anmeldetag: 14.07.2000
(51) Int. Cl.: F02D 41/18, G01F 1/68, G01F 1/696, G01F 1/72

(54) **VORRICHTUNG ZUR ERFASSUNG EINER PULSIERENDEN GRÖSSE**
DEVICE FOR MEASURING A PULSATING QUANTITY
DISPOSITIF POUR MESURER UNE GRANDEUR PULSATOIRE

(30) Priorität: 17.07.1999 DE 19933665
(43) Veröffentlichungstag der Anmeldung: 11.07.2001
(73) Patentinhaber: ROBERT BOSCH GMBH, 70442 Stuttgart (DE)
(72) Erfinder: KLEINHANS, Josef, . (DE); MUELLER, Wolfgang, 71277 Rutesheim (DE); KONZELMANN, Uwe, 71679 Asperg (DE)
(86) Internationale Anmeldenummer: PCT/DE2000/002310
(87) Internationale Veröffentlichungsnummer: WO 2001/006107

(56) Entgegenhaltungen:
- EP-A- 0 902 261
- DE-A- 19 952 294
- DE-C- 19 620 435
- US-A- 5 544 079
- US-A- 5 668 313
- PATENT ABSTRACTS OF JAPAN vol. 013, no. 552 (M-903), 8. Dezember 1989 (1989-12-08) & JP 01 227846 A (HITACHI LTD), 12. September 1989 (1989-09-12)

## Beschreibung

### Stand der Technik

Die Erfindung geht aus von einer Vorrichtung zur Erfassung einer pulsierenden Größe nach der Gattung des Hauptanspruchs und betrifft insbesonders eine Vorrichtung zur Erfassung der von einer Brennkraftmaschine angesaugten Luftmasse.

Zur Erfassung der von einer Brennkraftmaschine angesaugten Luftmasse werden üblicherweise mikromechanische Luftmassenmesser eingesetzt, deren Sensorelement der strömenden Luft ausgesetzt wird. Da die Luftmasse im Saugrohr der Brennkraftmaschine unter bestimmten Bedingungen als pulsierende Strömung im Saugrohr vorliegt, wird das Sensorelement beispielsweise nicht direkt im Saugrohr eingebaut, sondern in einem Strömungsbypass, in dem die Pulsationen geringer sind. Bei einigen Motoren, beispielsweise drosselfreien Motoren, sind die Saugrohrpulsationen jedoch besonders stark und können nicht ohne weiteres kompensiert werden.

Physikalisch sind der aerodynamischen Kompensation der Pulsationsfehler Grenzen gesetzt. Außerdem ist bei der Festlegung der Bypass-Geometrie des Luftmassenmessers die Kompensation durch die thermische Sensorträgheit begrenzt. Der Pulsationsfehler hängt von dem Parametern mittlere Luftmasse, Frequenz und Amplitude der Pulsationen ab. Für Parameterbereiche, bei denen die Bypass-Geometrie den thermischen Fehler des Sensors nicht ausgleichen kann, verbleiben letztendlich Fehlanzeigen durch Saugrohrpulsationen. Um diese Fehlanzeigen zu verringern, wird beispielsweise in der DE-OS 44 08 243 vorgeschlagen, neben einer pneumatischen Pulsationsdämpfung zusätzliche elektronische Filter einzusetzen, die das Ausgangssignal des Sensorelements in geeigneter Weise beeinflussen bzw. dämpfen. Das elektronische Filter ist dabei Bestandteil des Sensors und einer Schaltung zur Kennlinienanpassung und Kennlinienbegrenzung vorgeschaltet, wobei diese Schaltung zur Kennlinienanpassung und Kennlinienbegrenzung ebenfalls noch Bestandteil des Sensorelements ist. Das elektronische Filter ist dabei so an das zu erwartende Signal angepaßt, daß sowohl hochfrequente Eigenschwingungen als auch die Grundschwingung der Pulsation gedämpft wird, so daß die Pulsationsamplitude am Ausgang des Filters nur noch gering ist. Aus dem so erhaltenen Signal werden in einem nachfolgenden Mikrocomputer, beispielsweise dem Steuergerät einer Brennkraftmaschine Mittelwerte der pulsierenden Größe, also Mittelwerte der angesaugten Luftmasse berechnet.

Aus der EP 0 902 261 A1 ist eine Vorrichtung zur Erfassung einer pulsierenden Größe bekannt, mit deren Hilfe insbesondere die im Saugrohr einer Brennkraftmaschine strömende Luft analysiert wird. Bei der Bestimmung der zugehörigen Luftmasse werden die durch Pulsationen bzw. Rückströmungen auftretenden Fehlmessungen kompensiert. Dazu wird eine Korrekturfunktion gebildet, die drei Koeffizienten umfasst. Der tatsächliche Wert der pulsierenden Größe wird mit Hilfe dieser Korrekturfunktion aus gemessenen berechnet.

### Vorteile der Erfindung

Die erfindungsgemäße Vorrichtung zur Erfassung einer pulsierenden Größe mit den Merkmalen des Anspruchs 1 hat den Vorteil, daß eine besonders zuverlässige Kompensation des Pulsationsfehlers erhalten wird, die in vorteilhafter Weise an unterschiedliche Motoren angepaßt werden kann und bei allen möglichen Bedingungen zuverlässig funktioniert. Besonders vorteilhaft ist dabei, daß die Pulsationskompensation bereits im Sensor durchgeführt wird, so daß eine nachfolgende Auswerteeinrichtung, beispielsweise der Mikroprozessor eines Motorsteuergerätes entlastet wird. In vorteilhafter

Weise wird dabei ein Pulsationskennfeld, das bei der Kompensation berücksichtigt wird, im Sensor selbst abgelegt. Dieses Pulsationskennfeld kann beispielsweise an einem geeigneten Prüfstand ermittelt werden und vor der Inbetriebnahme des Motors in einen Speicher des einzusetzenden Sensors eingeschrieben werden. Das Pulsationskennfeld PK ist eine Funktion von verschiedenen Größen, z.B. PK = f (Luftmasse, Frequenz, Amplitude). Das Prinzip gilt ebenso, wenn im Steuergerät ein entsprechendes Kennfeld abgelegt wird, ohne Korrektur im HFM. Erzielt werden diese Vorteile durch eine Vorrichtung zur Erfassung einer pulsierenden Größe mit den Merkmalen des Anspruchs 1.

Die weiteren Vorteile der Erfindung werden durch die in den Unteransprüchen angegebenen Maßnahmen erhalten. Dabei kann unabhängig von diesen vorteilhaften Ausgestaltungen auch in der nachfolgenden Auswerteeinrichtung, also beispielsweise im Steuergerät zusätzlich noch ein Pulsationskennfeld vorhanden sein und es können weitere bzw. zusätzliche Korrekturmaßnahmen im Steuergerät durchgeführt werden. Vorteilhafterweise wird die Erfindung zur Ermittlung der von einem Motor bzw. einer Brennkraftmaschine durch das Saugrohr strömenden Luft eingesetzt, wobei als Sensor ein Heißfilmluftmassenmesser im Saugrohr angeordnet wird.

### Zeichnung

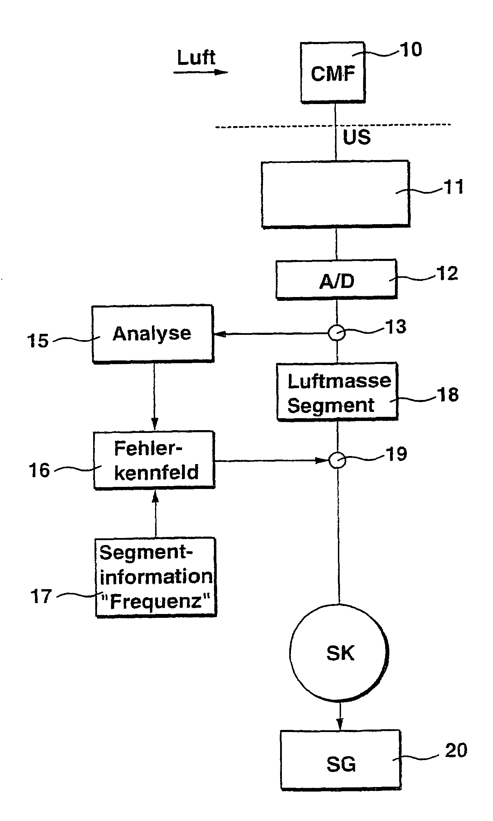

Ein Ausführungsbeispiel der Erfindung ist in der Zeichnung dargestellt und wird in der nachfolgenden Zeichnung näher erläutert.

### Beschreibung

In der einzigen Figur der Zeichnung ist ein Ausführungsbeispiel der Erfindung dargestellt. Mit diesem Ausführungsbeispiel soll die Masse der im Saugrohr einer Brennkraftmaschine strömenden Luft ermittelt werden. Generell läßt sich die Erfindung jedoch auf alle Meßvorrichtungen übertragen, mit denen eine pulsierende Größe ermittelt werden soll.

Bei dem in der Figur dargestellten Ausführungsbeispiel ist mit 10 das Sensorelement bezeichnet. Es handelt sich dabei beispielsweise um das Sensorelement eines Heißfilmluftmassenmessers, das sich im nicht dargestellten Saugrohr der Brennkraftmaschine befindet. Der Sensor umfaßt nicht nur das Sensorelement sondern auch die im folgenden näher beschriebene Vorrichtung zur Signalaufbereitung.

Das Ausgangssignal des Sensors US wird zunächst einer analogen Signalaufbereitung 11 zugeführt. Das aufbereitete Signal wird in der A/D-Schnittstelle 12 digitalisiert und anschließend einer Analyse 13 zugeführt. In der Analyse 13 wird das aufbereitete Signal hinsichtlich seiner Amplitude oder hinsichtlich der mittleren Luftmasse untersucht. Die Information der Pulsationsamplitude wird beispielsweise aus dem Signalmaximum bzw. dem Signalminimum bestimmt. Eine weitere Möglichkeit der Signalanalyse wäre eine gleitende Bestimmung des sogenannten rms-Wertes (Root-Mean-Square; Standardabweichung) aus dem Sensorsignal. Die Pulsationsfrequenz des Signales kann beispielsweise aus der Drehzahl des Motors abgeleitet werden oder aus einer Segmentinformation des Steuergerätes. Der zugehörige Auswerteblock "Segmentinformation Frequenz" ist in der Figur mit 17 bezeichnet. Diese Information wird ebenso dem Fehlerkennfeld 16 zugeführt, wie die in der Analyse 15 erhaltenen Informationen hinsichtlich der Amplitude oder der mittleren Luftmasse.

Mit Segment wird bei einem Motor ein Winkelbereich bezeichnet, der sich über zwei Kurbelwellenumdrehungen geteilt durch die Anzahl der Zylinder des Motors erstreckt. Die zugehörige Segmentinformation wird vom Steuergerät als Signal abgegeben, das für verschiedeneim Steuergerät ablaufende Berechnungen benötigt wird. Da die zu erwartende Frequenz der Pulsationen der Luft im Saugrohr von der Motordrehzahl bzw. umgekehrt von der Dauer, die die Kurbelwelle für die Drehung um einen Winkel, der einem Segment entspricht, abhängt, läßt sich aus der Segmentinformation die Pulsationsfrequenz bestimmen.

Dem Ausgangssignal US des Sensorelements wird also eine entsprechende elektronische Korrektur nachgeschaltet, die den Pulsationsfehler, der bei konventionellen Motoren auftritt, zuverläßig ausschaltet. Durch Kenntnis des Pulsationsfehlers, beispielsweise bei Motor-Vollast oder aus Prüfstandsmessungen kann somit mit einem im Sensor selbst abgelegten Kennfeld der Meßfehler korrigiert werden, in dem Informationen über die Frequenz der Saugrohrpulsation, deren Amplitude und der mittleren Luftmasse, die im Sensor abgelegt sind, ausgewertet werden.

Alternativ kann bei einem Sensor ohne Mikroprozessor das spezielle Kennfeld in einem Speicher des Steuergeräts 20 abgelegt werden und die Pulsationskorrektur im Steuergerät 20 ablaufen.

Durch Summation des Sensorsignals über ein Segment wird im Block "Luftmasse Segment" 18 ein Mittelwert erhalten. Diese Luftmasse pro Segment wird einer Fehlerkorrektur 19 unterworfen, wobei diese Fehlerkorrektur anhand der dem Fehlerkennfeld 16 entnommenen Daten erfolgt. Nach der Fehlerkorrektur steht ein korrigiertes Ausgangsssignal SK zur Verfügung, das dem Steuergerät 20 zugeführt wird. Die beschriebene Signalaufbereitung erfolgt im Sensor selbst, so daß dem Steuergerät 20 bereits ein korrigiertes Signal SK zur Verfügung gestellt wird.

Die mittlere Luftmasse ist nach einer Pulsationsperiode bzw. einem Segment aus dem Sensorsignal bestimmt. Mit diesen Informationen wird aus dem a priori erarbeiteten Fehlerkennfeld 16 die entsprechende Korrektur ausgelesen. Die Luftmasse liegt dann gemittelt über eine Pulsationsperiode fertig ausgewertet am Ausgang des Sensors als korrigiertes Ausgangssignal SK vor. Da diese Sensorkorrektur bereits bei der nächsten Pulsationsperiode vorliegt, ist es möglich, auch bei schnellen Lastwechseln des Motors sofort einen neuen, korrigierten Wert zur Verfügung zu stellen.

## Patentansprüche

1. Vorrichtung zur Erfassung einer pulsierenden Größe, der im Saugrohr einer Brennkraftmaschine strömenden Luft, mit einem Sensor, der ein Messelement und Mittel zur Signal aufbereitung umfasst, wobei die Mittel zur Signalaufbereitung Mittel zur Pulsationskorrektur aufweisen, in denen wenigstens eine Analyse der Amplitude des aufbereiteten Sensorsignals und/oder eine Mittelwertbildung der zu messenden Größe durchgeführt wird, **dadurch gekennzeichnet dass** die Analyseergebnisse in einem Kennfeld abgelegt werden, auf das bei der Pulsationskorrektur zurückgegriffen wird und dass im Kennfeld wenigstens die Informationen Pulsationsarnplitude, Pulsationsfrequenz und Drehzahl der Brennkraftmaschine enthalten ist.

2. Vorrichtung zur Erfassung einer pulsierenden Größe nach Anspruch 1, **dadurch gekennzeichnet, dass** die Mittel zur Signalaufbereitung einen Analogteil und einen Digitalteil umfassen, wobei die Analyse und die Pulsationskorrektur Bestandteil der digitalen Signalaufbereitung sind.

3. Vorrichtung zur Erfassung einer pulsierenden Größe nach Anspruch 1 oder 2, **dadurch gekennzeichnet**, das den Signalaufbereitungsmiteln von außen Informationen zuführbar sind, die Informationen über Betriebsbedingungen und die pulsierende Größe enthalten.

4. Vorrichtung zur Erfassung einer pulsierenden Größe nach Anspruch 3, **dadurch gekennzeichnet**, die pulsierende Größe die im Saugrohr einer Brennkraftmaschine strömende Luft ist, dass der Sensor ein Heißfilmluftmassenmesser ist, dass das korrigierte Ausgangssignal des Sensors dem Steuergerät der Brennkraftmaschine zugeführt wird und die Informationen bezüglich der pulsierenden Größe vom Steuergerät an den Sensor abgegeben werden.

5. Vorrichtung zur Erfassung einer pulsierenden Größe nach einem der vorhergehenden Ansprüche, **dadurch gekennzeichnet, dass** das Kennfeld entweder in einem Speicher, der Bestandteil des Sensors ist oder in einem Speicher des Steuergerätes abgelegt wird.

6. Vorrichtung zur Erfassung nach Anspruch 5, **dadurch gekennzeichnet, dass** bei einem Sensor, der keinen Speicher umfasst, das Kennfeld im Steuergerät abgelegt wird.

## Claims

1. Device for sensing a pulsating quantity of the air flowing into the intake manifold of an internal combustion engine, having a sensor which comprises a measuring element and means for conditioning signals, the means for conditioning signals having means for pulsation correction, in which at least one analysis of the amplitude or the conditioned sensor signal and/or a formation of mean values of the quantity to be measured are carried out, **characterized in that** the analysis results are stored in a characteristic diagram which is accessed during the pulsation correction, and **in that** the characteristic diagram contains at least the information relating to the pulsation amplitude, pulsation frequency and rotational speed of the internal combustion engine.

2. Device for sensing a pulsating quantity according to Claim 1, **characterized in that** the means for signalling conditioning comprises an analogue part and a digital part, the analysis and the pulsation correction being a component of the digital signal conditioning.

3. Device for sensing a pulsating quantity according to Claim 1 or 2, **characterized in that** information which includes information about operating conditions and the pulsating quantity can be fed from outside to the signal conditioning means.

4. Device for sensing a pulsating quantity according to Claim 3, **characterized in that** the pulsating quantity is the air flowing into the intake manifold of an internal combustion engine, **in that** the sensor is a hot-film air mass flow rate meter, **in that** the corrected output signal of the sensor is fed to the control device of the internal combustion engine and the information relating to the pulsating quantity is transmitted to the sensor by the control device.

5. Device for sensing a pulsating quantity according to one of the preceding claims, **characterized in that** the characteristic diagram is stored either in a memory which is a component of the sensor; or in a memory of the control device.

6. Device for sensing according to Claim 5, **characterized in that** in the case of a sensor which does not comprise a memory, the characteristic diagram is stored in.the control device.

## Revendications

1. Dispositif pour saisir une grandeur pulsatoire, l'air s'écoulant dans la tubulure d'admission d'un moteur à combustion interne, comportant un capteur, qui comprend un élément de mesure et des moyens de traitement de signal, les moyens de traitement de signal présentant des moyens de correction de la pulsation, dans lesquels on effectue au moins une analyse de l'amplitude du signal de capteur traité et/ou une formation de moyenne de la grandeur à mesurer,
**caractérisé en ce que**
les résultats de l'analyse sont reportés dans un diagramme caractéristique auquel on se réfère pour la correction de la pulsation, et le diagramme caractéristique contient au moins les informations relatives à l'amplitude de la pulsation, à la fréquence de la pulsation et au régime du moteur à combustion interne.

2. Dispositif pour saisir une grandeur pulsatoire selon la revendication 1,
**caractérisé en ce que**
les moyens de traitement de signal comprennent une partie analogique et une partie numérique, l'analyse et la correction de la pulsation étant des composants du traitement numérique du signal.

3. Dispositif pour saisir une grandeur pulsatoire selon la revendication 1 ou 2,
**caractérisé en ce que**
des informations provenant de l'extérieur peuvent être transmises aux moyens de traitement de signal, qui contiennent des informations relatives aux conditions de fonctionnement et à la grandeur pulsatoire.

4. Dispositif pour saisir une grandeur pulsatoire selon la revendication 3,
**caractérisé en ce que**
la grandeur pulsatoire est l'air s'écoulant dans la tubulure d'admission d'un moteur à combustion interne, le capteur est un débitmètre d'air massique à film chaud, le signal de sortie corrigé du capteur est transmis à l'unité de commande du moteur à combustion interne et les informations relatives à la grandeur pulsatoire sont émises par l'unité de commande vers le capteur.

5. Dispositif pour saisir une grandeur pulsatoire selon l'une quelconque des revendications précédentes,
**caractérisé en ce que**
le diagramme caractéristique est enregistré dans une mémoire qui constitue un composant du capteur ou dans une mémoire de l'unité de commande.

6. Dispositif pour saisir selon la revendication 5,
**caractérisé en ce que**
lorsque le capteur ne comprend aucune mémoire, le diagramme caractéristique est enregistré dans l'unité de commande.
